Europäisches Patentamt

European Patent Office

Office européen des brevets

(11) Veröffentlichungsnummer: **0 224 710**
**B1**

(12) **EUROPÄISCHE PATENTSCHRIFT**

(45) Veröffentlichungstag der Patentschrift:
27.12.90

(51) Int. Cl.⁵: **H01S 3/0975 5, H01S 3/041 5**

(21) Anmeldenummer: 86114846.8

(22) Anmeldetag: 25.10.86

(54) CO2-Axialstrom-Transportlaser für Materialbearbeitung.

(30) Priorität: 27.11.85 DE 3541876

(43) Veröffentlichungstag der Anmeldung:
10.06.87 Patentblatt 87/24

(45) Bekanntmachung des Hinweises auf die Patenterteilung:
27.12.90 Patentblatt 90/52

(84) Benannte Vertragsstaaten:
BE CH FR GB IT LI

(56) Entgegenhaltungen:
EP-A- 0 152 084
US-A- 4 363 126

SOVIET JOURNAL OF QUANTUM ELECTRONICS,
Band 7, Nr. 12, Dezember 1977, Seiten 1507-1509,
American Institute of Physics; K.H. DONNERHACKE et
al.: "Pulse shaping by the separate excitation of
different parts of an active medium in a laser resonator"
UIM. AUXIL. IND. PAPELERA
(CURSO) 1982, 139-152 (publ. 1984) 000

(73) Patentinhaber: MESSER GRIESHEIM GMBH, Hanauer
Landstrasse 330, D-6000 Frankfurt/Main(DE)

(72) Erfinder: Bakowsky, Lothar, Dr., Drosselweg 5,
D-8038 Gröbenzell(DE)
Erfinder: Höllt, Christian, Edelweissstrasse 20,
D-8039 Puchheim(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen $CO_2$-Laser, insbesondere einen schnellströmenden Hochleistungsaxialstrom-$CO_2$-Transportlaser mit einem geschlossenen Gaskreislauf zur Materialbearbeitung, mit mindestens zwei lasergasdurchströmten Entladungsrohren und einem Hochfrequenzgenerator mit Anregungsfrequenzen im Megahertz-Bereich, der über Elektroden an die Entladungsstrecke angeschlossen ist.

Bei $CO_2$-Lasern erfolgt die Anregung kontinuierlich in einer elektrischen Gleich- oder Wechselstromentladung oder impulsförmig bei geringen bis hohen Folgefrequenzen.

Aus der DE-OS 34 04 787 ist ein Gaslaser mit mindestens zwei Entladungsstrecken bekannt, von denen jede Entladungsstrecke extra durch einen Transformator versorgt wird und jeder dieser Transformatoren von demselben Strom erregt wird.

Diese DC-angeregten Laser sind bei guter Strahlqualität nur bis Frequenzen von 500 Hertz pulsbar.

Aus dem Prospekt 1kW-$CO_2$-Laser mit Hochfrequenzanregung, Deutsche Forschungs- und Versuchsanstalt für Luft- und Raumfahrt E.V. (DFVLR) Institut für technische Physik, 7000 Stuttgart 80, Pfaffenwaldring 38 - 40 ist ein 1kW-$CO_2$-Laser mit transversaler Hochfrequenzanregung und axialer Gasströmung im geschlossenen Gaskreislauf bekannt. Dieser Laser weist eine Resonatorlänge von 3,5 m bei zweimaliger Faltung auf und wird mit einer Anregungsfrequenz von 13,56 Megahertz betrieben. Der Wirkungsgrad dieses Laser liegt bei $\geqq$ 10 %.

Aus der Zeitschrift Industrieservice 9/1985, Seite 43 ist ein Hochfrequenzgenerator mit einer Arbeitsfrequenz von 13,56 Megahertz bekannt. Durch Zusammenschalten mehrerer HF-Generator-Module können Ausgangsleistungen bis 5 kW erreicht werden. Der Hochfrequenzgenerator kann zur Anregung eines Lasers bei einem Pulsbetrieb bis 10 kHz eingesetzt werden.

Während bei dem erstgenannten Laser mit einer Strahlleistung von 1 kW die benötigte Sendeleistung von ungefähr 10 kW über große und teure Spezialkabel und -stecker übertragen wird, ist mit dem später genannten Hochfrequenzgenerator von maximal 5 kW nur eine Strahlleistung des Lasers von 500 Watt möglich.

Zur gleichmäßigen Verteilung der Sendeleistung auf die verschiedenen Entladungsstrecken werden sogenannte Anpaßnetzwerke oder Anpaßschaltungen verwendet. In diesen Anpaßnetzwerken entsteht insbesondere bei der Aufteilung der Sendeleistung ein merklicher Leistungsverlust.

Der Erfindung liegt die Aufgabe zugrunde, den Wirkungsgrad eines im Megahertz-Bereich angeregten $CO_2$-Lasers gegenüber dem bekannten Stand der Technik zu erhöhen.

Diese Aufgabe wird erfindungsgemäß dadurch gelöst, daß jedem Entladungsrohr jeweils ein Hochfrequenzgenerator mit impedanzangepaßter Sendeleistung zugeordnet ist.

Vorteilhaft wird jedem Hochfrequenzgenerator jeweils ein Anpaßnetzwerk zugeordnet, welche mit den Elektroden verbunden ist.

Durch die Zuordnung jeweils eines Hochfrequenzgenerators mit jeweils einem Anpaßnetzwerk zu einem Entladungsrohr bzw. einer Entladungsstrecke wird vorteilhaft eine Baueinheit mit einem Wirkungsgrad von $\simeq$ 20 % gebildet, die einfach aufgebaut und zu beliebigen Einheiten zusammengesetzt werden kann. Vorteilhaft wird mit der Baueinheit Hochfrequenzgenerator/Anpaßnetzwerk eine impedanzangepaßte Sendeleistung pro Gasentladung erzielt. Teure Spezialleitungen und -stecker können entfallen. Durch die Ausbildung des Hochfrequenzgenerators als wassergekühlten Transistorsender und der mechanischen Kopplung des Anpaßnetzwerkes und des Hochfrequenzgenerators wird ein kompakter Aufbau ermöglicht. Durch die Zuordnung jeweils eines Hochfrequenzgenerators mit beliebiger Ausgangsleistung zu jedem Entladungsrohr bzw. jeder Entladungsstrecke wird es einerseits möglich, höhere Laserleistungen bei hohem Wirkungsgrad, d. h. geringen Leistungsverlusten des Senders, zu erzielen. Sind pro Entladungsrohr bzw. Entladungsstrecke höhere Senderleistungen erforderlich, so können diese vorteilhaft auch durch mehrere Einkopplungen pro Entladungsstrecke vorgenommen werden.

Weiterbildungen der Erfindung sind in den Unteransprüchen angegeben.

Ein Ausführungsbeispiel der Erfindung ist in der Zeichnung dargestellt und wird im folgenden näher beschrieben.

Es zeigten:

Fig. 1 einen schematischen Aufbau eines schnellströmenden Hochleistungsaxialstrom-$CO_2$-Lasers mit zwei Entladungsrohren, denen jeweils ein Hochfrequenzgenerator zugeordnet ist;

Fig. 2 einen Schnitt durch ein Entladungsrohr mit wassergekühlten Elektroden und ein Ausführungsbeispiel eines Hochfrequenzgenerators von 3 kW Sendeleistung.

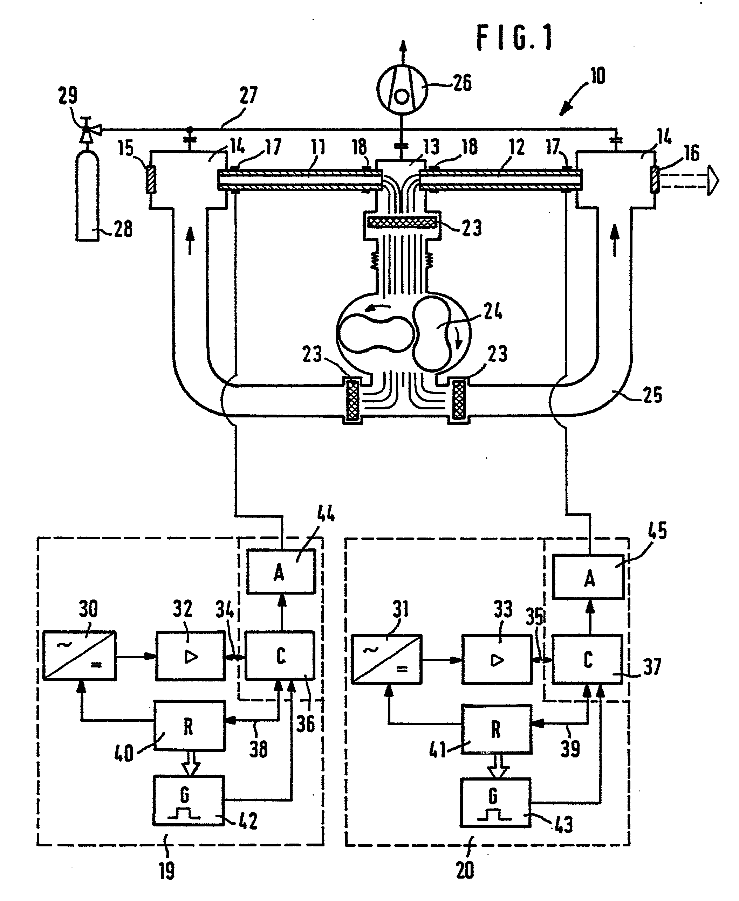

In Fig. 1 ist ein schnellströmender Hochleistungsaxialstrom-$CO_2$-Laser mit 10 bezeichnet, der im wesentlichen aus zwei Entladungsrohren 11, 12 mit gemeinsamem Absaugkopf 13 und zwei Einströmköpfen 14 besteht. Den Resonator bilden ein total reflektierender Endspiegel 15 und ein teildurchlässiger Auskoppelspiegel 16.

Den Laserentladungsrohren 11, 12 sind ferner noch zu beschreibende Ringelektroden 17, 18 zugeordnet, die jeweils an einen Hochfrequenzgenerator 19, 20 angeschlossen sind.

Als Lasermedium dient ein schnellströmendes Helium-Kohlendioxid-Stickstoff-Gemisch. Eine elektrische Gasentladung, die im Lasermedium bei einem Druck von etwa 80 Millibar brennt, regt die Laserstrahlung an. Die Wellenlänge der Laserstrahlung liegt im Infraroten bei 10,6 Mikrometer. Die elektrisch eingekoppelte Leistung setzt sich zu einem Teil in Laserstrahlung um, der Rest heizt das Gas auf. Um die Wärme abzuführen, wird das Gas sowohl in Wärmetauschern 23 als auch an den wassergekühlten Entladungsrohrwänden gekühlt. Den Gastransport von dem Absaugkopf 13 zu den beiden Einströmköpfen 14 übernimmt eine Wälzkolbenpumpe 24. Vorzugsweise ist der Gastransport als in sich geschlossener Lasergaskreislauf 25 ausgebildet. Durch die tangentiale Einströmung des Lasergases an den Einströmköpfen 14 und die Absaugung an dem Absaugkopf 13 wird eine Strömungsrichtung entgegen der Laserspiegelanordnung 15, 16 erreicht und somit die Verschmutzungsgefahr von Auskoppelspiegel 16 und Endspiegel 15 verringert.

Zur Aufrechterhaltung eines mittleren Druckes innerhalb der Entladungsrohre 11, 12 von ca. 80 Millibar ist an den Lasergaskreislauf 25 eine Vakuumpumpe 26 angeschlossen.

Über eine Leitung 27 wird dem Laser 10 kontinuierlich eine geringe Lasergasmenge von der Gasversorgung 28 zugeführt. Über eine nicht näher dargestellte Druck- bzw. Vakuummeßzelle, die an den Lasergaskreislauf 25 angeschlossen ist, wird der Lasergas-Ist-Druck erfaßt und einer Regeleinheit zugeführt, die mit dem Magnetventil 29 der Gasversorgung 28 verbunden ist.

Jeder Hochfrequenzgenerator 19 oder 20 besteht wahlweise aus einem Netzteil 30, 31 pro Hochfrequenzgenerator 19, 20 oder einem Netzteil für mehrere Hochfrequenzgeneratoren. Dieses Netzteil versorgt den Hochfrequenzgenerator mit der benötigten Gleichspannung. Nach einem Ausführungsbeispiel der Erfindung ist das Netzteil 30, 31 mit einem Modular aufgebauten Verstärker 32, 33 verbunden, der über eine Hin- und Rückleitung 34, 35 an einen Combiner 36, 37 angeschlossen ist. Der Combiner 36, 37 ist über einen Steuerbus 38, 39 mit einem Rechner 40, 41 verbunden, der an die Netzteile 30, 31 angeschlossen ist. Über den Rechner werden die Netzteile 30, 31 ein- bzw. ausgeschaltet. Der Rechner steuert einen Pulsgenerator 42, 43, der mit dem Combiner 36, 37 verbunden ist. Vorteilhaft ist in dem Combiner 36, 37 jeweils ein Anpaßnetzwerk 44, 45 angeordnet, über das der Combiner mit den Elektroden 17 des Lasers 10 verbunden ist. Vorteilhaft ist in der Baueinheit Combiner/Anpaßnetzwerk 37, 45 und 36, 44 eine Sicherheitsabschaltung integriert, die immer dann anspricht und den Hochfrequenzgenerator 19, 20 abschaltet, wenn beispielsweise die maximale Leistung oder Temperatur überschritten wird. Durch die Sicherheitsabschaltung wird vorteilhaft eine Zerstörung des Combiners 36, 37 und der Verstärker 32, 33 verhindert.

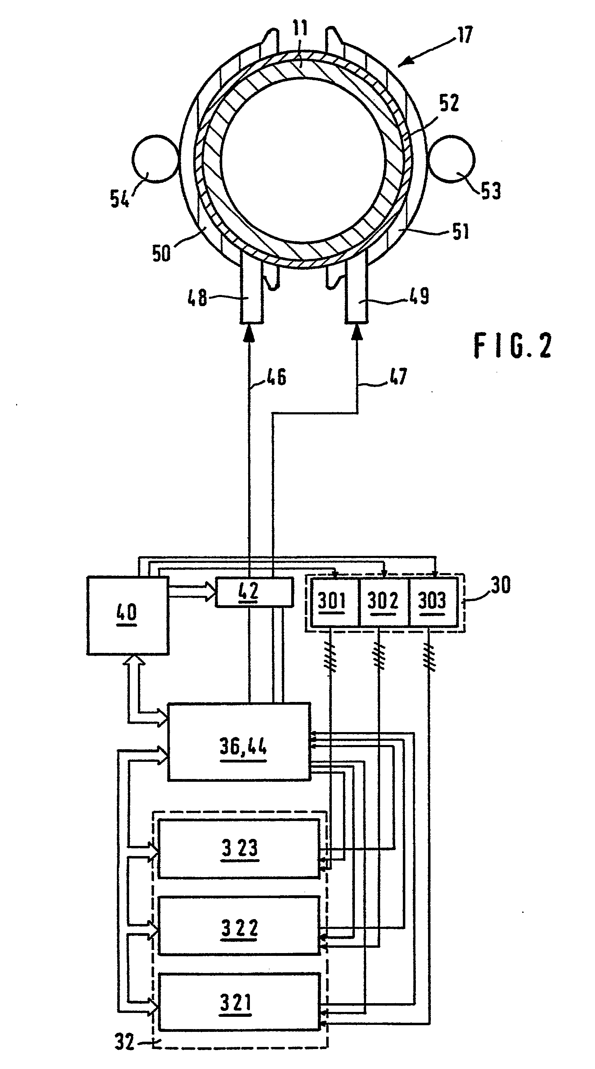

In der Fig. 2 ist einer der beiden gleich aufgebauten Hochfrequenzgeneratoren 19, 20 näher dargestellt, wobei gleiche Bezugszeichen für gleiche Bauteile verwendet werden. In der Fig. 2 ist ein Hochfrequenzgenerator mit einer Sendeleistung von 3 kW dargestellt, der wie zuvor im Stand der Technik geschildert, aus Bausteinen mit einer Sendeleistung von 1 kW zusammengeschaltet ist. Die zu jeweils einem Hochfrequenzgenerator von 1 kW Sendeleistung gehörenden Netzteile 30 sind bei dem 3 kW Hochfrequenzgenerator 19 mit 301, 302 und 303 bezeichnet. Jedes Netzteil 301, 302, 303 ist mit jeweils einem Verstärker 321, 322, 323 verbunden. Die Verstärker 321, 322, 323 sind in diesem Ausführungsbeispiel parallel geschaltet und mit der Baueinheit Combiner mit Anpaßnetzwerk 36, 44 verbunden. Der Rechner 40 und der Pulsgenerator 42 sind, wie bereits vorstehend beschrieben, angeschlossen.

Selbstverständlich ist es auch möglich, jedem Verstärker 321, 322, 323 einen Combiner mit Anpaßnetzwerk 36, 44 und einen separaten Rechner 40 sowie einen separaten Pulsgenerator 42 zuzuordnen.

Der Combiner mit dem Anpaßnetzwerk 36, 44 sowie die Verstärker 321, 322, 323 sind über einen Steuerbus miteinander verbunden. Über Leitungen 46, 47 ist der Combiner mit dem Anpaßnetzwerk 36, 44 an den Hochfrequenzanschluß 48, 49, der vorteilhaft als Halbschalen 50, 51 ausgebildeten Elektroden 17, 18 angeschlossen. Zwischen den sich über eine bestimmte Länge erstreckenden Elektroden 17, 18 und dem als Glasrohr ausgebildeten Entladungsrohr 11, 12 ist ein Dielektrikum 52, wie Glas und Luft oder Teflon angeordnet. Vorzugsweise ist jede Halbschale 50, 51 nur an ihren Endbereichen auf diesem Dielektrikum 52 gelagert. Vorteilhaft ist jeder Halbschale 50, 51 eine Wasserkühlung 53, 54 zugeordnet.

In dem vorzugsweise als wassergekühlter Transistorsender ausgebildeten Hochfrequenzgenerator 19, 20 wird die von dem Netzteil 30, 31 gelieferte Gleichspannung in eine Hochfrequenz-Wechselspannung von beispielsweise 13,56 Megahertz bei einer Sendeleistung von 3 kW umgewandelt. Selbstverständlich sind auch Anregungsfrequenzen von beispielsweise 27,12 Megahertz oder 40,68 Megahertz möglich. Eine Sendeleistung von 3 kW ist hierbei für ein Entladungsrohr 11 mit einer Ausgangsleistung von $\geqq$ 500 Watt erforderlich. Diese Sendeleistung, die bei einer Senderimpedanz, beispielsweise 20 bis 50 Ohm, zur Verfügung steht, wird von dem Anpaßnetzwerk 44, 45 auf die Impedanz der in jedem Entladungsrohr 11, 12 entstehenden Gasentladung angepaßt. Die Impedanz der Gasentladung innerhalb der Entladungsrohre 11, 12 setzt sich hierbei aus einem kapazitiven, induktiven und ohmschen Widerstand zusammen. Die Impedanz der Gasentladung weist hierbei Toleranzen bis zu 20 % auf, was einer Schwankung der Laserarbeitskennlinie, jeder Gasentladung zwischen 100 Ohm und einigen Kiloohm entspricht. Vorteilhaft werden diese Schwankungen der Laserarbeitskennlinie ermittelt und mittels eines Einstellgliedes im Anpaßnetzwerk 44, 45 durch eine jeder Gasentladung entsprechenden Sendeleistung korrigiert. Hierdurch wird es vorteilhaft möglich, den Wirkungsgrad um bis zu 10 % zu steigern.

## Patentansprüche

1. CO$_2$-Laser, insbesondere schnellströmender Hochleistungsaxialstrom-CO$_2$-Transportlaser mit einem geschlossenen Gaskreislauf zur Materialbearbeitung, mit mindestens zwei lasergasdurchströmten Entladungsrohren und einem Hochfrequenzgenerator mit Anregungsfrequenzen im Megahertz-Bereich, der über Elektroden an die Entladungsstrecke angeschlossen ist,
dadurch gekennzeichnet,
daß jedem Entladungsrohr (11, 12) jeweils ein Hochfrequenzgenerator (19, 20) mit impedanzangepaßter Sendeleistung zugeordnet ist.

2. CO₂-Laser nach Anspruch 1,
dadurch gekennzeichnet,
daß jedem Hochfrequenzgenerator (19, 20) jeweils ein Anpaßnetzwerk (44, 45) zugeordnet ist, dessen Ausgang mit den Elektroden (17,18) und dessen Eingang mit dem Hochfrequenzgenerator (19, 20) verbunden ist.

3. CO₂-Laser nach Anspruch 2,
dadurch gekennzeichnet,
daß das Anpaßnetzwerk (44,45) und der Hochfrequenzgenerator (19,20) als mechanische Baueinheit ausgebildet sind.

4. CO₂-Laser nach Anspruch 2 oder 3,
dadurch gekennzeichnet,
daß das Anpaßnetzwerk (44, 45) über einen Verstärker ( 32, 33) mit einem Netzteil ( 30, 31) und über einen Steuerbus (38, 39) mit einem das Netzteil (30, 31) und einen Pulsgenerator (42, 43) steuernden Rechner (40, 41) verbunden ist.

5. CO₂-Laser nach einem der Ansprüche 2 bis 4,
dadurch gekennzeichnet,
daß in jedem Anpaßnetzwerk (44, 45) ein Einstellglied angeordnet ist, mit dem die Sendeleistung an jede in den Entladungsrohren (11, 12) entstehende impedanzabhängige Gasentladung anpaßbar ist.

6. CO₂-Laser nach einem der Ansprüche 2 bis 5,
dadurch gekennzeichnet,
daß das Anpaßnetzwerk (44, 45) eine Sicherheitsabschaltung aufweist.

7. CO₂-Laser nach einem der Ansprüche 1 bis 6,
dadurch gekennzeichnet,
daß der Hochfrequenzgenerator (19, 20) als wassergekühlter Transistorsender ausgebildet ist.

8. CO₂-Laser nach einem der Ansprüche 1 bis 7,
dadurch gekennzeichnet,
daß die Elektroden ( 17, 18) als Halbschalen (50, 51) ausgebildet und auf einem zwischen Entladungsrohr (11, 12) und Elektroden (17, 18) angeordnetem Dielektrikum (52) aufgebracht sind.

9. CO₂-Laser nach einem der Ansprüche 1 bis 8,
dadurch gekennzeichnet,
daß die Elektroden(17, 18) von einer Wasserkühlung ( 53, 54) umgeben sind.

## Claims

1. CO₂ laser, particularly a fast-flowing high-power axial-flow CO₂ transport laser comprising a closed gas circuit for machining material, with at least two discharge tubes through which laser gas flows and a high-frequency generator with excitation frequencies in the megahertz range which is connected to the discharge path via electrodes, characterized in that in each case one high-frequency generator (19, 20) with impedance-matched transmitting power is allocated to each discharge tube (11, 12).

2. CO₂ laser according to Claim 1, characterized in that in each case one matching network (44, 45),
the output of which is connected to the electrodes (17, 18) and the input of which is connected to the high-frequency generator (19, 20), is allocated to each high-frequency generator (19, 20).

3. CO₂ laser according to Claim 2, characterized in that the matching network (44, 45) and the high-frequency generator (19, 20) are constructed as mechanical constructional unit.

4. CO₂ laser according to Claim 2 or 3, characterized in that the matching network (44, 45) is connected via an amplifier (32, 33) to a power supply (30, 31) and via a control bus (38, 39) to a computer (40, 41) controlling the power supply (30, 31) and a pulse generator (42, 43).

5. CO₂ laser according to one of Claims 2 to 4, characterized in that in each matching network (44, 45) an adjusting element is arranged by means of which the transmitting power can be matched to each impedance-dependent gas discharge produced in the discharge tubes (11, 12).

6. CO₂ laser according to one of Claims 2 to 5, characterized in that the matching network (44, 45) exhibits a safety shutdown.

7. CO₂ laser according to one of Claims 1 to 6, characterized in that the high-frequency generator (19, 20) is constructed as water-cooled transistor transmitter.

8. CO₂ laser according to one of Claims 1 to 7, characterized in that the electrodes (17, 18) are constructed as half-shells (50, 51) and are attached to a dielectric (52) arranged between discharge tube (11, 12) and electrodes (17, 18).

9. CO₂ laser according to one of Claims 1 to 8, characterized in that the electrodes (17, 18) are surrounded by water cooling (53, 54).

## Revendications

1. Laser à CO₂ à transport axial de forte puissance à flux rapide comportant un circuit de gaz fermé pour l'usinage de la matière, avec au moins deux tubes à décharge parcourus par le gaz laser et un générateur de haute fréquence à fréquence d'excitation dans le domaine du mégahertz, qui est relié par des électrodes au chemin à décharge, laser caractérisé en ce qu'à chaque tube à décharge (11, 12) on associe un générateur de haute fréquence (19, 20) dont la puissance d'émission est adaptée à l'impédance.

2. Laser à CO₂ selon la revendication 1, caractérisé en ce qu'à chaque générateur à haute fréquence (19, 20), on associe chaque fois un réseau-adaptateur (44, 45) dont la sortie est reliée aux électrodes (17, 18) et dont l'entrée est reliée au générateur haute fréquence (19, 20).

3. Laser à CO₂ selon la revendication 2, caractérisé en ce que le réseau adaptateur (44, 45) et le générateur haute fréquence (19, 20) sont des ensembles mécaniques.

4. Laser à CO₂ selon l'une des revendications 2 ou 3, caractérisé en ce que le réseau adaptateur (44, 45) est relié par un amplificateur (32, 33) à une partie de réseau (30, 31) et par un bus de commande (38, 39) à un calculateur (40, 41) commandant la partie de réseau (30, 31) et un générateur d'impulsions (42, 43).

5. Laser à $CO_2$ selon l'une des revendications 2 à 4, caractérisé en ce que dans chaque réseau adaptateur (44, 45), il est prévu un organe de réglage par lequel s'adapte la puissance d'émission en fonction de la décharge de gaz dépendant de l'impédance dans les tubes à décharge (11, 12).

6. Laser à $CO_2$ selon l'une des revendications 2 à 5, caractérisé en ce que le réseau adaptateur (44, 45) comporte un circuit de coupure de sécurité (circuit de protection).

7. Laser à $CO_2$ selon l'une des revendications 1 à 6, caractérisé en ce que le générateur de haute fréquence (19, 20) est un émetteur à transistors refroidi par de l'eau.

8. Laser à $CO_2$ selon l'une quelconque des revendications 1 à 7, caractérisé en ce que les électrodes (17, 18) sont des demi-coquilles (50, 51) et elles sont montées sur un diélectrique (52) prévu entre le tube à décharge (11, 12) et les électrodes (17, 18).

9. Laser à $CO_2$ selon l'une quelconque des revendications 1 à 8, caractérisé en ce que les électrodes (17, 18) sont entourées par un moyen de refroidissement à l'eau (53, 54).

F I G . 1

FIG.2